# EUROPÄISCHE PATENTSCHRIFT

(11) **EP 0 727 889 B1**
(45) Veröffentlichungstag und Bekanntmachung des Hinweises auf die Patenterteilung: **18.06.2003**
(21) Anmeldenummer: 96102246.4
(22) Anmeldetag: 15.02.1996
(51) Int. Cl.: H04J 14/02, H04N 7/22, H04B 10/207

(54) **Optisches Übertragungssystem für Kabelfernsehsignale und Video- und Telekommunikationssignale**
Optical transmission system for cable television signals and video- and telecommunication signals
Système de transmission optique pour signaux de télévision par câble et pour signaux de vidéo et télécommunication

(30) Priorität: 18.02.1995 DE 19505578
(43) Veröffentlichungstag der Anmeldung: 21.08.1996
(73) Patentinhaber: ALCATEL, 75008 Paris (FR)
(72) Erfinder: Schmid, Wolfgang, D-73733 Esslingen (DE)
(74) Vertreter: Schätzle, Albin, Dipl.-Phys.

(56) Entgegenhaltungen:
- DE-A- 4 116 660
- DE-A- 4 323 147
- DE-C- 4 405 460

## Beschreibung

Die Erfindung betrifft ein optisches Übertragungssystem nach dem Oberbegriff des Patentanspruchs 1 und eine optische Netzabschlußeinrichtung gemäß dem Oberbegriff des Patentanspruchs 2.

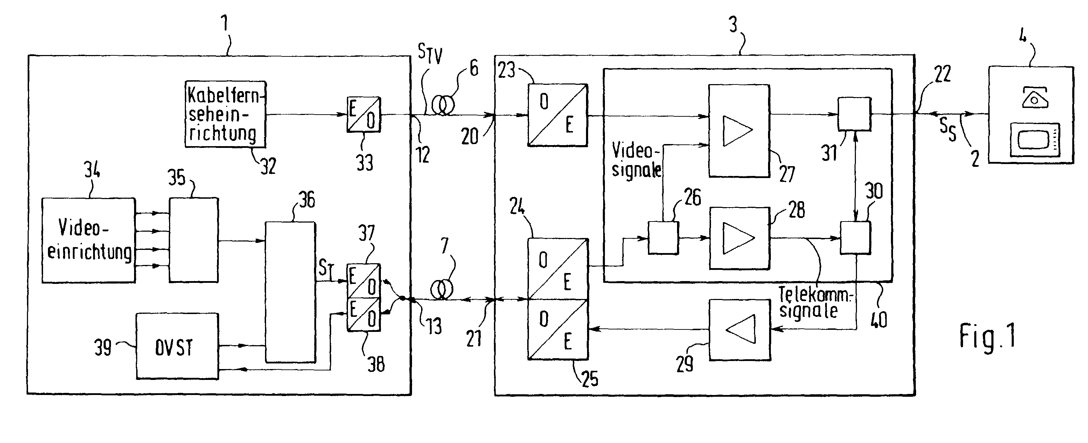

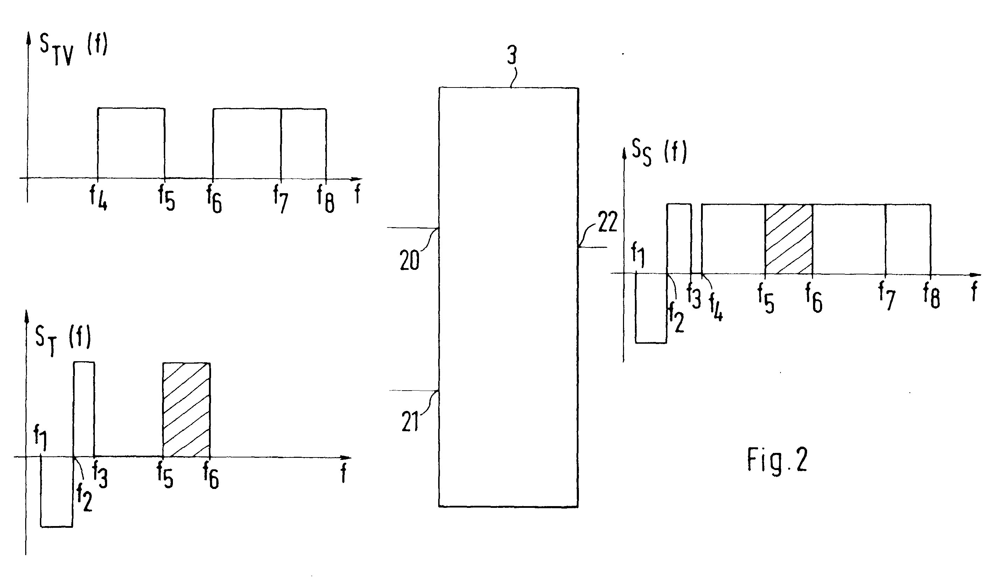

Ein optisches Übertragungssystem mit den im Oberbegriff des Patentanspruchs 1 genannten Merkmalen ist bekannt, z.B. aus: L. Adnet et al, "Optoelektronik in der Teilnehmeranschlußleitung", Elektrisches Nachrichtenwesen (Alcatel), 4. Quartal 1992, Seiten 58 bis 65. Dort ist in Fig. 1 ein optisches Übertragungssystem in einer allgemeinen FTTB-Architektur gezeigt. Von einer Vermittlungs- und Verteileinrichtung aus werden Kabelfernseh- und teilnehmerindividuelle Telekommunikationssignale über ein Lichtwellenleiter-Verteilnetz zu einem Gebäude übertragen, in dem sich mehrere Teilnehmer befinden.

Dieses optische Übertragungssystem ist aus zwei Teilsystemen aufgebaut: einem Schmalbandteil, mit dem teilnehmerindividuelle Telekommunikationssignale übertragen werden, und einem Breitbandteil für über das Lichtwellenleiter-Verteilnetz zu verteilende Kabelfernsehsignale. Die Kabelfernsehsignale werden mit Licht einer Wellenlänge von 1550 nm übertragen, und die teilnehmerindividuellen Telekommunikationssignale werden mit Licht einer Wellenlänge von 1300 nm übertragen; der Schmalbandteil ermöglicht bidirektionale Übertragung.

In dem Gebäude befinden sich zwei optische Netzabschlüsse: Dem optischen Netzabschluß für das Breitbandsystem (BONT) wird das Kabelfernsehsignal zugeführt und dem optischen Netzabschluß für das Schmalbandsystem wird das teilnehmerindividuelle Telekommunikationssignal zugeführt.

Die optischen Netzabschlüsse wandeln die empfangenen optischen Signale in diesen Signalen entsprechende elektrische Signale, die dann über Koaxialkabel (Kabelfernsehsignal) bzw. über Kupferkabel (teilnehmerindividuelles Telekommunikationssignal) zu den Teilnehmern übertragen werden.

Auf der Grundlage solcher bekannter optischer Übertragungssysteme gibt es derzeit Bestrebungen, teilnehmerindividuelle Dienste anzubieten, die auch eine Interaktionsmöglichkeit zwischen Dienstanbieter, Netzbetreiber und Teilnehmer bieten. Ein solcher teilnehmerindividueller Dienst ist z.B. ein Video-Abrufdienst (engl.: Video on Demand Service).

Ein Übertragungssystem, das einen solchen Video-Abrufdienst ermöglicht, ist bekannt aus M. Yamashita et al, "Optical Video Transport / Distribution System with Video on Demand Service", SPIE, Vol. 1817, Optical Communications (1992), Seiten 12 bis 22. Dort ist ein Übertragungssystem gezeigt, das ein ringförmiges Verteilnetz hat. Die teilnehmerindividuellen Videosignale, die zur Durchführung des Video-Abrufdienstes von der Zentrale (dort "Basic Unit" genannt) zu Teilnehmern des Kabelfernseh-Verteilnetzes übertragen werden müssen, werden dort als Analogsignale übertragen. Die Videosignale werden jeweils Unterträgern mit verschiedenen Frequenzen aufmoduliert, die modulierenden Unterträger (37 Stück) werden zu einem Frequenzmultiplexsignal zusammengefaßt und dieses wird im Wellenlängenmultiplex mit den Kabelfernseh-Signalen zu optischen Netzabschlüssen (dort ONU's genannt) übertragen. In Tabelle 1 ist gezeigt, daß mehrere Wellenlängen verwendet werden müssen, um insgesamt 400 Kabelfernseh-Teilnehmern die Möglichkeit zu bieten, individuelle Videoprogramme abzurufen.

Optische Übertragungssysteme, in denen teilnehmerindividuelle Dienste angeboten werden sollen, müssen kostengünstig sein, um eine entsprechende Akzeptanz bei den Teilnehmern zu erreichen. D.h., in solchen optischen Übertragungssystemen müssen hohe Kosten auf der Teilnehmerseite vermieden werden. Dazu gehört auch, dass möglichst wenig Änderungen der Struktur von bereits bestehenden optischen Übertragungssystemen notwendig sind. Man geht somit von der Annahme aus, dass ein beträchtlicher Teil von Kabelfernseh-Vetteilnetzen, die in naher Zukunft eine Chance haben, irgendwo eingeführt zu werden, die Eigenschaft hat, dass das Lichtwellenleiter-Verteilnetz nicht bis zu den Häusern oder Wohnungen der Teilnehmer reicht, sondern am Straßenrand in optischen Netzabschlüssen endet und von dort durch ein elektrisches Anschlussnetz bis zu den Teilnehmern weitergeführt ist.

In DE 4116660 ist ein optisches Nachrichtenübertragungssystem für den Teilnehmeranschlussbereich mit optischen Verstärkern beschrieben. Das System dient dazu, Nachrichtensignale, insbesondere Fernsehsignale, von einer Zentrale zu vielen Teilnehmern zu verteilen und eine bidirektionale Übertragung von Fernsprech- und Datensignalen zwischen der Zentrale und den Teilnehmern zu ermöglichen. Das dazu verwendete Netz ist ein Lichtwellenleiternetz mit Stern-Stern-Struktur, bei dem zwischen aufeinanderfolgenden Verzweigungspunkten faseroptische Verstärker vorhanden sind. Die zu verteilenden Nachrichtensignale werden über das Lichtwellenleiternetz mit einer ersten Wellenlänge zu den Teilnehmern übertragen, die von der Zentrale zu den Teilnehmern zu übertragenden teilnehmerindividuellen Nachrichtensignale werden durch Frequenzmodulation in ein anderes Frequenzband als die Verteilsignale umgesetzt (durch Frequenzmodulation) und mit derselben Wellenlänge wie die Verteilsignale zu den Teilnehmern übertragen, und die von den Teilnehmern zur Zentrale zu übertragenden teilnehmerindividuellen Signale werden durch Frequenzmodulation in ein weiteres Frequenzband umgesetzt und optisch mit einer zweiten Wellenlänge zur Zentrale übertragen. Dieses optische Signal wird an geeigneten Stellen verstärkt, und mehrere alternative Ausführungsbeispiel für diese Verstärkung sind angegeben.

In DE 4323147 ist ein Kabelfernseh-Verteilnetz mit Abruf-Videosignal-Übertragung beschrieben.

Es besteht der Wunsch, Teilnehmern eines Kabelfernseh-Verteilnetzes neben dem Dienst des Kabelfernsehens einen Abruf-Video-Dienst anzubieten. Da auf absehbare Zeit der Lichtwellenleiter-Teil der Kabelfernseh-Verteilnetze nicht bis zu den Teilnehmern reichen wird, sondern in optischen Netzabschlüssen enden wird und von dort jeweils durch ein optisches Anschlussnetz bis zu den Teilnehmern weitergeführt wird, stellt sich das Problem, wie die Gesamtheit von teilnehmerindividuellen Videosignalen zu den Teilnehmern übertragen werden kann, damit diese die jeweils abgerufenen Videosignale empfangen können. Die Übertragung von der Zentrale erfolgt digital im Zeitmultiplex- und Wellenmultiplex über das Lichtwellenleiter-Verteilnetz bis zu den optischen Netzabschlüssen. In jedem optischen Netzabschluss wird nur der Teil von teilnehmermindividuellen Videosignalen entnommen, der für Teilnehmer bestimmt ist, die an den optiischen Netzabschluss angeschlossen sind. Die entnommenen teilnehmerindividuellen Videosignale werden Unterrägern aufmoduliert und im Frequenzmultiplex den Kabelfernseh-Signalen hinzugefügt, die über das elektrische Anschlussnetz zu den an den optischen Netzabschluss angeschlossenen Teilnehmern verteilt werden.

Der Erfindung liegt die Aufgabe zugrunde, ein kostengünstiges, optisches Übertragungssystem für die Übertragung von Kabelfernsehsignalen und teilnehmerindividuellen Video- und Telekommunikationssignalen anzugeben. Ein die Aufgabe lösendes optisches Übertragungssystem ist Gegenstand des Patentanspruchs 1.

Außerdem liegt der Erfindung die Aufgabe zugrunde, eine optische Netzabschlusseinrichtung für ein optisches Übertragungssystem anzugeben. Eine diese Aufgabe lösende optische Netzabschlusseinrichtung ist Gegenstand des Patentanspruchs 2. Vorteilhafte Ausgestaltungen der Erfindung sind in den Unteransprüchen angegeben.

Ein Vorteil der Erfindung ist, dass in der optischen Netzabschlusseinrichtung die elektrischen Signale so zusammengeführt werden, daß herkömmliche Breitband-TV-Verstärker verwendet werden können, die auf die jeweiligen Frequenzbereiche der elektrischen Signale optimiert sind. Ein weiterer Vorteil der Erfindung ist, daß in einem Ausführungsbeispiel nur ein Breitband-TV-Verstärker benötigt wird.

Die Erfindung wird im folgenden anhand von Zeichnungen näher erläutert. Es zeigen:
- Fig. 1: ein schematisches optisches Übertragungssystem mit einer optischen Netzabschlußeinrichtung,
- Fig. 2: eine erste Übersicht über zu übertragende Signale, die als Funktion der Frequenz gezeigt sind,
- Fig. 3: ein weiteres Ausführungsbeispiel einer optischen Netzabschlußeinrichtung, und
- Fig. 4: eine zweite Übersicht über zu übertragende Signale.

Die Fig. 1 zeigt ein schematisches, optisches Übertragungssystem für die Übertragung von Kabelfernsehsignalen und teilnehmerindividuellen Video- und Telekommunikationssignalen. Dieses optische Übertragungssystem besteht u.a. aus einer Zentrale 1, zwei Lichtwellenleitern 6, 7, einer optischen Netzabschlußeinrichtung 3, einem elektrischen Anschlußnetz 2 und Endgeräten 4 (Telefon und/oder Fernsehgerät) beim Teilnehmer.

In den Lichtwellenleitern 6, 7 sind üblicherweise Verzweigungspunkte vorgesehen, durch die das Licht, das sich z.B. im Lichtwellenleiter 6 ausbreitet, auf mehrere Lichtwellenleiter aufgeteilt wird, die wiederum jeweils mit optischen Netzabschlußeinrichtungen verbunden sind. Von der Zentrale 1 ausgesendete Signale können aber auch im Wellenlängenmultiplex-Verfahren über einen gemeinsamen Lichtwellenleiter übertragen werden. In der Fig. 1 ist dies nicht gezeigt. Die Lichtwellenleiter 6, 7 bilden allgemein ein Lichtwellenleiter-Verteilnetz.

Die Zentrale 1 hat einen Ausgang 12 für Licht, mit dem das Kabelfernsehsignal übertragen werden soll. An diesen Ausgang 12 ist ein Ende des Lichtwellenleiters 6 angeschlossen, der mit seinem anderen Ende an einen Eingang 20 der optischen Netzabschlußeinrichtung 3 angeschlossen ist. An einen Anschluß 13 der Zentrale 1 ist ein Ende des Lichtwellenleiters 7 angeschlossen, der mit seinem anderen Ende an einen Anschluß 21 der optischen Netzabschlußeinrichtung 3 angeschlossen ist. Die Anschlüsse 13, 21 sind Ein- und Ausgänge, da im Lichtwellenleiter 7 Licht bidirektional übertragen wird. Auch ein weiterer Anschluß 22 der optischen Netzabschlußeinrichtung 3 ist ein Ein- und Ausgang; dieser Anschluß 22 ist mit dem elektrischen Anschlußnetz 2 verbunden, an das Endgeräte 4 von mehreren Teilnehmern angeschlossen sind. In der Fig. 1 sind nur die Endgeräte 4 eines Teilnehmers gezeigt.

Unter der Zentrale 1 ist hier folgendes zu verstehen:

Für die teilnehmerindividuellen Telekommunikationssignale ist die Zentrale 1 z.B. eine Ortsvermittlungsstelle (OVST), die mit anderen Vermittlungsstellen des öffentlichen Fernmeldenetzes verbunden ist. Die Kabelfernsehsignale S_{TV} können der Zentrale 1 z.B. über eine vorhandene Satellitenempfangsantenne oder über Lichtwellenleiter zugeführt werden.

Die Zentrale 1 hat eine Kabelfernseheinrichtung 32, die die Kabelfernsehsignale S_{TV} zur Übertragung zur Verfügung stellt. Ein elektrooptischer Wandler 33, der mit dem Ausgang 12 verbunden ist, sendet die Kabelfernsehsignale S_{TV} als ein optisches Signal über den Lichtwellenleiter 6 zur optischen Netzabschlußeinrichtung 3. Die Übertragung der Kabelfernsehsignale S_{TV} kann z.B. mit Licht einer Wellenlänge von 1500 nm erfolgen.

Außerdem hat die Zentrale 1 eine Ortsvermittlungsstelle (OVst) 39 für die teilnehmerindividuellen Telekommunikationssignale. Die Funktion der Ortsvermittlungsstelle 39 ist allgemein bekannt, so daß die Funktion nicht näher beschrieben wird.

Eine weitere Funktion der Zentrale 1 ist, teilnehmerindividuelle Videosignale zur Verfügung zu stellen. Dafür hat die Zentrale 1 eine Videoeinrichtung 34, eine Zeitmultiplexeinrichtung 35, eine Frequenzmultiplexeinrichtung 36 und einen elektrooptischen Wandler 37. Ein in der Zentrale 1 vorhandener optoelektrischer Wandler 38 empfängt optische Signale, die von den Endgeräten 4 zur Ortsvermittlungsstelle 39 übertragen werden. Der optoelektrische Wandler 38 und der elektrooptische Wandler 37 sind mit dem Anschluß 13 verbunden. Die Videoeinrichtung 34 ist ein sogenannter Videoserver.

Äußert ein leilnehmer über eine Telefonverbindung einen Wunsch, einen bestimmten Videofilm zu sehen, so wird dieser vom Videoserver zur Verfügung gestellt. Die Videoeinrichtung 34 (Videoserver) hat Ausgänge für analoge oder digitale Signale.

Die Ausgänge (z.B. vier Ausgänge) der Videoeinrichtung 34 sind mit der Zeitmultiplexeinrichtung 35 verbunden, durch die jedem Videofilm ein Kanal zugeordnet wird. Der Teilnehmer hat zu dem Kanal Zugriff, in dem sein Wunschfilm übertragen wird. Das aus der Zeitmultiplexeinrichtung 35 austretende Zeitmultiplexsignal, in dem die Videosignale enthalten sind, wird der Frequenzmultiplexeinrichtung 36 zugeführt. Durch diese Frequenzmultiplexeinrichtung 36 werden die teilnehmerindividuellen Videosignale (Zeitmultiplexsignal) und die von der Ortsvermittlungsstelle 39 kommenden teilnehmerindividuellen Telekommunikationssignale zu einem ersten Frequenzmultiplexsignal S_{T} zusammengefaßt, das von dem elektrooptischen Wandler 37 in ein dem ersten Frequenzmultiplexsignal S_{T} entsprechendes optisches Signal wandelt. Das erste Frequenzmultiplexsignal S_{T} wird z.B. mit Licht einer Wellenlänge von 1300 nm übertragen. Erfindungsgemäß werden hier also die teilnehmerindividuellen Videosignale und die teilnehmerindividuellen Telekommunikatonssignale als erstes Frequenzmultiplexsignal S_{T} übertragen. Die Kabelfernsehsignale S_{TV} sind in diesem ersten Frequenzmultiplexsignal S_{T} nicht enthalten.

Die Zentrale 1 teilt dem Teilnehmer mit, auf welchem Kanal und zu welcher Uhrzeit die Übertragung des Videofilms erfolgt. Selbstverständlich können auch andere Arten von teilnehmerindividuellen Signalen, z.B. Audiosignale (Musik, Vorlesung, Vortrag) auf Abruf zum Teilnehmer übertragen werden.

Jeder Teilnehmer der an dem Videoabruf-Dienst teilnimmt, selektiert und empfängt das für ihn bestimmte teilnehmerindividuelle Videosignal aus der Menge von teilnehmerindividuellen Videosignalen, die zu einer Gruppe von Teilnehmern, die an einer optischen Netzabschlußeinrichtung 3 angeschlossen sind, verteilt werden.

Im folgenden wird die detaillierter gezeigte optische Netzabschlußeinrichtung 3 erläutert, die folgende in der Fig. 1 gezeigte Bestandteile hat:
- zwei optoelektrische Wandler 23, 24
- einen elektrooptischen Wandler 25
- drei Verstärker 27, 28, 29
- drei Filtereinrichtungen 26, 30, 31

Weitere Bestandteile, z.B. zur Steuerung und Überwachung der optischen Netzabschlußeinrichtung 3 sind in Fig. 1 nicht gezeigt. Die Verstärker 27 und 28 und die drei Filtereinrichtungen 26, 30, 31 bilden eine Demultiplex- und Multiplexeinrichtung 40. Der optoelektrische Wandler 23 ist mit dem Eingang 20 verbunden und wandelt das Licht, durch das die Kabelfernsehsignale S_{TV} übertragen werden, in ein dem Licht entsprechendes elektrisches Signal, das dem Verstärker 27 zugeführt wird. Dieser Verstärker 27 ist ein Breitbandverstärker, d.h. er hat über einen weiten Frequenzbereich eine gleichmäßige Verstärkung. Der optoelektrische Wandler 24 ist mit dem Anschluß 21 verbunden und wandelt das Licht, durch das das erste Frequenzmultiplexsignal S_{T} (teilnehmerindividuelle Video- und Telekommunikationssignale) übertragen wird, in ein dem Licht entsprechendes elektrisches Signal, das der Filtereinrichtung 26 zugeführt wird. Diese Filtereinrichtung 26 ist eine Kombination aus einem Hochpaß- und Tiefpaßfilter. Damit werden die Videosignale von den Telekommunikationssignalen getrennt; die Filtereinrchtung 26 wirkt als Splitter. Das vom optoelektrischen Wandler 24 kommende elektrische Signal wird dazu in der Filtereinrichtung 26 auf einen ersten und zweiten Signalweg aufgeteilt. Im ersten Signalweg befindet sich das Hochpaßfilter, das nur Frequenzen oberhalb einer Grenzfrequenz durchläßt, die so gewählt ist, daß die Videosignale ungedämpft zum Verstärker 27 gelangen; die teilnehmerindividuellen Telekommunikationssignale werden gesperrt. Im zweiten Signalweg befindet sich das Tiefpaßfilter, das nur Frequenzen unterhalb einer Grenzfrequenz durchläßt. Die Telekommunikationssignale gelangen so gedämpft zum Verstärker 28, der ein Schmalbandverstärker ist.

Damit dieses Trennen möglich ist, ohne Information zu verlieren, müssen die Frequenzbereiche der Signale so festgelegt sein, daß es zu keinen Überlappungen im Frequenzbereich kommt. Auf die Frequenzbereiche der Signale (Frequenzpläne) wird in Zusammenhang mit Fig. 2 näher eingegangen.

Der Verstärker 27 führt die Kabelfernsehsignale S_{TV} und die Videosignale zusammen und verstärkt sie. Die Frequenzbereiche dieser beiden Signale sind so gewählt, daß sie sich nicht überlappen. Aus dem Verstärker 27 tritt somit ein drittes Frequenzmultiplexsignal aus, das aus den Kabelfernsehsignalen S_{TV} und den Videosignalen zusammengesetzt ist, und das der Filtereinrichtung 31 zugeführt wird.

Die durch den Verstärker 28 verstärkten Telekommunikationssignale werden über die Filtereinrichtung 30 der Filtereinrichtung 31 zugeführt. Die Filtereinrichtung 31 ist ebenfalls eine Kombination aus einem Hochpaßfilter und einem Tiefpaßfilter. Diese Filtereinrichtung 31 ist so ausgelegt, daß vom Anschluß 22 kommende teilnehmerindividuelle Telekommunikationssignale durch das Hochpaßfilter, das sich in einem ersten Signalweg befindet, gesperrt werden und so nicht zum ersten Verstärker 27 gelangen. Das vom Verstärker 27 kommende dritte Frequenzmultiplexsignal (Kabelfernseh- und Videosignale) wird dagegen vom Hochpaßfilter durchgelassen. Über einen zweiten Signalweg, in dem sich das Tiefpaßfilter befindet, gelangen die in Richtung zur Zentrale 1 zu übertragenden teilnehmerindividuellen Telekommunikationssignale ungedämpft zur Filtereinrichtung 30, das ebenfalls eine Kombination aus einem Hochpaßfilter und einem Tiefpaßfilter ist.

Die Filtereinrichtung 30 ist so ausgelegt, daß es die vom Verstärker 28 kommenden teilnehmerindividuellen Telekommunikationssignale ungehindert zur Filtereinrichtung 31 durchläßt und die in Richtung zur Zentrale 1 zu übertragenden teilnehmerindividuellen Telekommunikationssignale nur zum Verstärker 29 durchläßt. An der Filtereinrichtung 31 werden das dritte Frequenzmultiplexsignal und die von der Filtereinrichtung 30 kommenden teilnehmerindividuellen Telekommunikationssignale zu einem zweiten Frequenzmultiplexsignal S_{S} zusammengefaßt, das am Ausgang 22 austritt. In diesem zweiten Frequenzmultiplexsignal S_{S} sind alle zu übertragenden Signale enthalten und werden über ein elektrisches Anschlußnetz 2 übertragen.

Bei dem in Fig. 1 gezeigten optischen Übertragungssystem werden auch von den Endgeräten 4 der Teilnehmer ausgehende teilnehmerindividuelle Telekommunikationssignale, z.B. Telefon- und Datensignale, (up-link) zur Zentrale übertragen, die auch über die optische Netzabschlußeinrichtung 3 geführt werden. Um dies zu gewährleisten gibt es für diese Richtung einen getrennten Signalweg. Vom Anschluß 22 aus werden die teilnehmerindividuellen Telekommunikationssignale über die beiden Filtereinrichtungen 31, 30 zum Verstärker 29 und von dort aus zum elektrooptischen Wandler 25 geführt. Die danach als ein optisches Signal vorliegenden Telekommunikationssignale treten am Anschluß 21 aus der optischen Netzabschlußeinrichtung 3 aus.

In Fig. 2 ist eine Übersicht über zu übertragende Signale (Kabelfernsehsignale S_{TV}, teilnehmerindividuelle Video- und Telekommunikationssignale) gezeigt, die jeweils als Funktion der Frequenz dargestellt sind. Eine solche Darstellung wird im folgenden als Frequenzplan bezeichnet. Zum besseren Verständnis sind die Frequenzpläne bezogen auf die in Fig. 2 schematisch eingezeichnete optische Netzabschlußeinrichtung 3 angeordnet, d.h. am Eingang 20 ist der Frequenzplan der Kabelfernsehsignale S_{TV'} am Anschluß 21 ist der Frequenzplan des ersten Frequenzmultiplexsignals S_{T} (teilnehmerindividuelle Video- und Telekommunikationssignale) und am Anschluß 22 ist der Frequenzplan des sich im Anschlußnetz 2 ausbreitenden zweiten Frequenzmultiplexsignals eingezeichnet.

In Fig. 2 sind die Kabelfernsehsignale mit S_{TV}, das erste Frequenzmultiplexsignal mit S_{T} und das zweite Frequenzmultiplexsignal, das sich im Anschlußnetz 2 ausbreitet, mit S_{S} bezeichnet. Für vorkommende Frequenzen f₁ bis f₈ gilt, daß die Frequenz von f₁ bis f₈ zunimmt. Der erste Frequenzplan, d.h. S_{TV} (f), zeigt, daß die Kabelfernsehsignale drei Frequenzbereiche haben: Ein erster Frequenzbereich liegt zwischen den Frequenzen f₄ und f₅, ein zweiter Frequenzbereich zwischen den Frequenzen f₆ und f₇, und ein dritter Frequenzbereich zwischen den Frequenzen f₇ und f₈.

Der zweite Frequenzplan, d.h. S_{T} (f), zeigt, daß das erste Frequenzmultiplexsignal S_{T} (teilnehmerindividuelle Video- und Telekommunikationssignal) drei Frequenzbereiche hat:

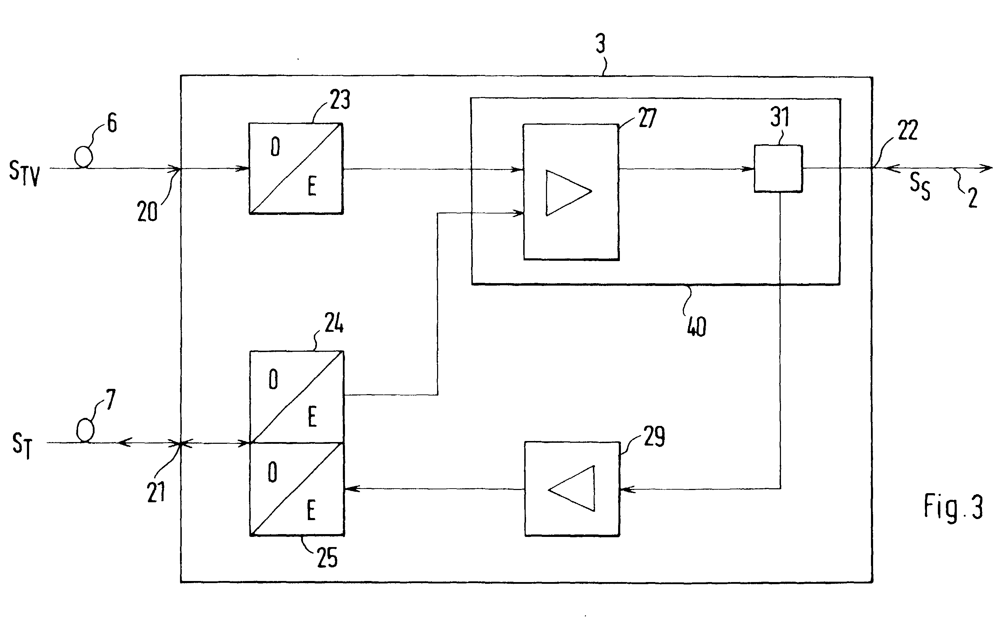

Ein erster Frequenzbereich liegt zwischen den Frequenzen f₁ und f₂, ein zweiter Frequenzbereich zwischen den Frequenzen f₂ und f₃ und ein dritter Frequenzbereich zwischen den Frequenzen f₅ und f₆ (in der Fig. 3 ist dieser Frequenzbereich schraffiert). Der erste Frequenzbereich ist für die Übertragung von Telekommunikationssignalen zur Zentrale festgelegt (up-link). Zur Kennzeichnung, daß er für diese Übertragungsrichtung ist, ist er im Frequenzplan mit negativer Amplitude eingezeichnet. Ein weiterer Frequenzbereich, der für die Überwachung der Übertragung festgelegt ist, ist nicht eingezeichnet.

Der dritte Frequenzplan, d.h. S_{S} (f), zeigt, daß das Signal, das sich im Anschlußnetz 2 ausbreitet, aus einer Kombination aller zu übertragenden Signale hervorgeht. Die Frequenzen f₁ bis f₈ sind so gewählt, daß sie sich nicht überlappen, so daß keine Information verloren geht.

Die Kabelfernsehsignale S_{TV} haben z.B. folgende Frequenzbereiche:
- AM-VSB-Bereich von f₄ = 130 MHz bis f₅ = 300 MHz,
- AM-VSB-Bereich von f₆ = 450 MHz bis f₇ = 600 MHz,
- DVB (NVOD)-Bereich von f₇ = 600 MHz bis f₈ = 860 MHz,
Die Videosignale belegen in den Frequenzmultiplexsignalen den Frequenzbereich von f₅ = 300 MHz bis f₆ = 450 MHz, und die Telekommunikationssignale belegen den Frequenzbereich unterhalb von f₄ = 130 MHz.

Die angegebenen Frequenzwerte sind Anhaltswerte, um die Frequenzaufteilung darzustellen. Benachbarte Frequenzbereiche, z.B. AM-VSB-Vereich und Videosignalbereich (f₅), sind selbstverständlich so gewählt, daß sie sich nicht überlappen; ein ausreichender Frequenzabstand ist gegeben.

In Fig. 3 ist ein weiteres Ausführungsbeispiel einer optischen Netzabschlußeinrichtung 3 gezeigt. Von der in Fig. 1 gezeigten optischen Netzabschlußeinrichtung 3 unterscheidet sie sich dadurch, daß keine Filtereinrichtungen 26, 30 und kein Verstärker 28 vorhanden sind. Die restlichen Bestandteile der in Fig. 3 gezeigten optischen Netzabschlußeinrichtung 3 haben die gleichen Bezugszeichen wie die in Fig. 1 gezeigten.

Das vom optoelektrischen Wandler 24 kommende elektrische Signal (elektrisches Frequenzmultiplexsignal S_{T}) wird direkt dem Verstärker 27 zugeführt. Dort werden das Kabelfernsehsignal S_{TV} und das erste Frequenzmultiplexsignal S_{T} zusammengeführt und verstärkt. In diesem Ausführungsbeispiel wird kein Verstärker 28 benötigt.

Die Übertragung der teilnehmerindividuellen Signale von den Teilnehmern zur Zentrale 1 wird dadurch nicht beeinflußt: Der Verstärker 29 ist direkt mit der Filtereinrichtung 31 verbunden.

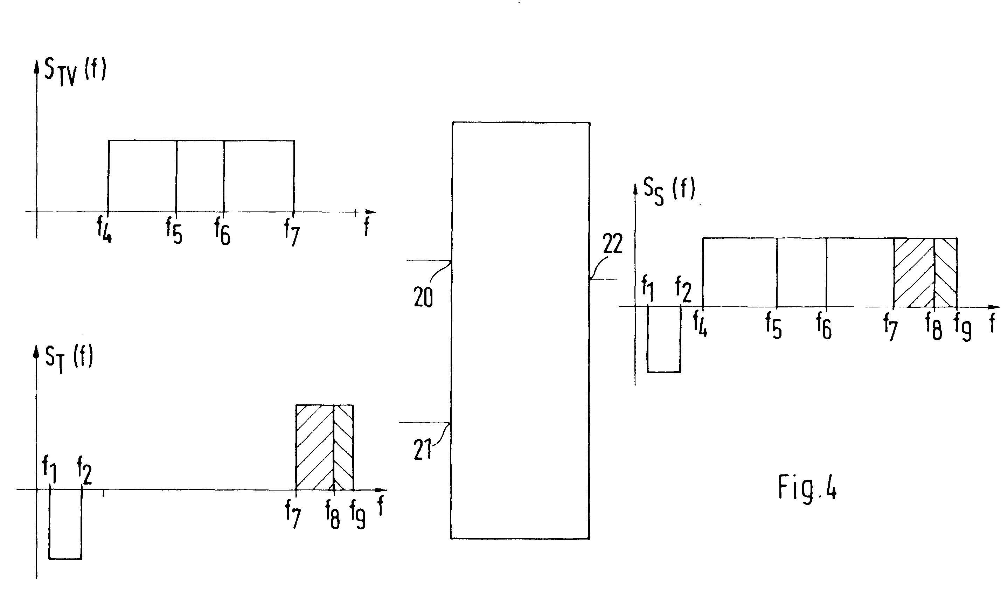

Damit die gemeinsame Verstärkung des Kabelfernsehsignals S_{TV} und der teilnehmerindividuellen Video- und Telekommunikationssignale möglich ist, sind die Frequenzbereiche entsprechend den in Fig. 4 gezeigten Frequenzplänen zu wählen.

Diese Frequenzpläne sind analog den in Fig. 2 gezeigten dargestellt und es werden die gleichen Bezeichnungen verwendet.

Der Frequenzplan S_{TV} (f) für das Kabelfernsehsignal S_{TV} belegt die Frequenzbereiche zwischen f₄ und f₅, zwischen f₅ und f₆ und zwischen f₆ und f₇.

Der Frequenzplan S_{T} (f) für die teilnehmerindividuellen Videound Telekommunikationssignale belegt die Frequenzbereiche zwischen f₁ und f₂, zwischen f₇ und f₈, und zwischen f₈ und f₉.

Der Frequenzplan S_{S} (f) ist die Kombination aller zu übertragenden Signale.

Im dem mit Fig. 3 und Fig. 4 erklärten Ausführungsbeispiel sind die teilnehmerindividuellen Video- und Telekommunikationssignale im Frequenzbereich oberhalb der Kabelfernsehsignale angeordnet.

## Patentansprüche

1. Optisches Übertragungssystem,
- bei dem eine Zentrale (1) und mindestens eine mit der Zentrale (1) durch ein Lichtwellenleiternetz (6,7) verbundene optische Netzabschlußeinrichtung (3) vorhanden sind,
- bei dem mehrere Endgeräte (4) mit der optischen Netzabschlußeinrichtung (3) verbunden sind, und
- bei dem in der Zentrale (1) Mittel (32, 33) vorhanden sind, um Kabelfernsehsignale (S_{TV}) optisch auszusenden,
**dadurch gekennzeichnet,**
- **daß** in der Zentrale (1) weitere Mittel (34, 35, 36, 31) vorhanden sind, um teilnehmerindividuelle Videosignale und teilnehmerindividuelle Telekommunikationssignale zu einem ersten Frequenzmultiplexsignal (S_{T}) zusammenzufassen und als optisches Signal aus zusenden,
- **daß** in der optischen Netzabschlußeinrichtung (3) eine Demultiplex- und Multiplexeinrichtung (40) vorhanden ist, um nach der optischen Übertragung der Kabelfernsehsignale (S_{TV}) und des ersten Frequenzmultiplexsignals (S_{T}) diese zu einem zweiten Frequenzmultiplexsignal (S_{S}) zusammenzufassen, das über ein elektrisches Anschlußnetz (2) zu den Endgeräten (4) übertragen wird, und
- **daß** die Demultiplex- und Multiplexeinrichtung (40) erste Mittel (26, 27), die die teilnehmerindividuellen Videosignale und die teilnehmerindividuellen Telekommunikationssignale trennen und die Kabelfernsehsignale und die teilnehmerindividuellen Videosignale zu einem dritten Frequenzmultiplexsignal zusammenzufassen, und zweite Mittel (28, 30, 31) hat, die das dritte Frequenzmultiplexsignal und die teilnehmerindividuellen Telekommunikationssignale zu dem zweiten Frequenzmultiplexsignal (S_{S}) zusammenfassen.

2. Optische Netzabschlußeinrichtung (3) für ein optisches Übertragungssystem, **dadurch gekennzeichnet, daß** eine Demultiplex- und Multiplexeinrichtung (40) vorhanden ist, um nach einer optischen Übertragung von Kabelfernsehsignalen (S_{TV}) und eines aus teilnehmerindividuellen Videosignalen und teilnehmerindividuellen Telekommunikationssignalen bestehenden ersten Frequenzmultiplexsignals (S_{T}) diese zu einem zweiten Frequenzmultiplexsignal (S_{S}) zusammenzufassen, das an einem Ausgang (22) der optischen Netzabschlußeinrichtung (3) austritt, und daß die Demultiplex- und Multiplexeinrichtung (40) erste Mittel (26, 27), die die teilnehmerindividuellen Videosignale und die teilnehmerindividuellen Telekommunikationssignale trennen und die Kabelfernsehsignale und die teilnehmerindividuellen Videosignale zu einem dritten Frequenzmultiplexsignal zusammenfassen, und zweite Mittel (28, 30, 31) hat, die das dritte Frequenzmultiplexsignal und die teilnehmerindividuellen Telekommunikationssignale zu dem zweiten Frequenzmultiplexsignal (S_{S}) zusammenfassen.

3. Optisches Übertragungssystem nach Anspruch 1, oder optische Netzabschlußeinrichtung nach Anspruch 2,
**dadurch gekennzeichnet, daß** die ersten Mittel (26, 27) der Demultiplex- und Multiplexeinrichtung (40) aus einer ersten Filtereinrichtung (26), die die teilnehmerindividuellen Videosignale und die teilnehmerindividuellen Telekommunikationssignale aus dem ersten Frequenzmultiplexsignal (S_{T}) trennt, und einer ersten Verstärkereinrichtung (27) bestehen, die die Kabelfernsehsignale (S_{TV}) und die teilnehmerindividuellen Videosignale verstärkt.

4. Optisches Nachrichtenübertragungssystem nach Anspruch 1, oder optische Netzabschlußeinrichtung nach Anspruch 2, **dadurch gekennzeichnet, daß** die zweiten Mittel (28, 30, 31) der optischen Netzabschlußeinrichtung (3) aus einer zweiten Verstärkereinrichtung (28), die die aus dem ersten Frequenzmultiplexsignal (S_{T}) hervorgehenden teilnehmerindividuellen Telekommunikationssignale verstärkt, einer zweiten Filtereinrichtung (30), die die verstärkten teilnehmerindividuellen Telekommunikationssignale durchläßt, und einer dritten Filtereinrichtung (31) bestehen, die das dritte Frequenzmultiplexsignal und die von der zweiten Filtereinrichtung (30) kommenden teilnehmerindividuellen Telekommunikationssignale durchläßt.

## Claims

1. An optical transmission system
- which comprises a center (1) and at least one optical network termination (3) connected to the center (1) by a fiber-optic network (6, 7),
- wherein a plurality of terminals (4) are connected to the optical network termination (3), and
- wherein means (32, 33) are provided at the center (1) for optically transmitting cable television signals (S_{TV}),
**characterized in**
- **that** at the center (1), further means (34, 35, 36, 37) are provided for combining subscriber-assigned video signals and subscriber-assigned telecommunications signals into a first frequency-division multiplex signal (S_{T}) and for transmitting this multiplex signal as an optical signal, and
- **that** the optical network termination (3) comprises a demultiplexing and multiplexing facility (40) for combining the optically transmitted cable television signals (S_{TV}) and the optically transmitted first frequency-division multiplex signal (S_{T}) into a second frequency-division multiplex signal (S_{S}) which is transmitted to the terminals (4) over an electrical access network (2), and
- **that** the demultiplexing and multiplexing facility (40)comprises first means (26, 27), which separate the subscriber-assigned video signals and the subscriber-assigned telecommunications signals and combine the cable television signals and the subscriber-assigned video signals into a third frequency-division multiplex signal, and second means (28, 30, 31), which combine the third frequency-division multiplex signal and the subscriber-assigned telecommunications signals into the second frequency-division multiplex signal (S_{S}).

2. An optical network termination (3) for an optical transmission system, **characterized in that** a demultiplexing and multiplexing facility (40) is provided for combining optically transmitted cable television signals (S_{TV}) and an optically transmitted first frequency-division multiplex signal (S_{T}) consisting of subscriber-assigned video signals and subscriber-assigned telecommunications signals into a second frequency-division multiplex signal (S_{S}), which appears at an output (22) of the optical network termination (3), and that the demultiplexing and multiplexing facility (40) comprises first means (26, 27), which separate the subscriber-assigned video signals and the subscriber-assigned telecommunications signals and combine the cable television signals and the subscriber-assigned video signals into a third frequency-division multiplex signal, and second means (28, 30, 31), which combine the third frequency-division multiplex signal and the subscriber-assigned telecommunications signals into the second frequency-division multiplex signal (S_{S}).

3. An optical transmission system as claimed in claim 1 or an optical network termination as claimed in claim 2, **characterized in that** the first means (26, 27) of the demultiplexing and multiplexing facility (40) consist of a first filter device (26), which separates the subscriber-assigned video signals and the subscriber-assigned telecommunications signal from the first frequency-division multiplex signal (S_{T}), and a first amplifier device (27), which amplifies the cable television signals (S_{TV}) and the subscriber-assigned video signals.

4. An optical transmission system as claimed in claim 1 or an optical network termination as claimed in claim 2, **characterized in that** the second means (28, 30, 31) of the optical network termination (3) consist of a second amplifier device (28), which amplifies the subscriber-assigned telecommunications signals separated from the first frequency-division multiplex signal (S_{T}), a second filter device (30), which passes the amplified subscriber-assigned telecommunications signals, and a third filter device (31), which passes the third frequency-division multiplex signal and the subscriber-assigned telecommunications signals coming from the second filter device (30).

## Revendications

1. Système de transmission optique,
- dans lequel sont prévus un central (1) et au moins un dispositif terminal de réseau optique (3) relié au central (1) par un réseau de guide d'ondes lumineuses (6, 7),
- dans lequel plusieurs appareils terminaux (4) sont branchés ou reliés au dispositif terminal de réseau optique (3), et
- dans lequel dans le central (1) sont prévus des moyens (32, 33) pour émettre par voie optique des signaux de télévision par câble (S_{TV}),
**caractérisé**
- **en ce que** dans le central (1) sont prévus d'autres moyens (34, 35, 36, 31) destinés à regrouper des signaux vidéo propres aux abonnés et des signaux de télécommunications propres aux abonnés en un premier signal de multiplexage en fréquence (S_{T}) et à l'émettre en tant que signal optique,
- **en ce que** dans le dispositif terminal de réseau optique (3) est prévu un dispositif de démultiplexage et de multiplexage (40) pour, après transmission optique des signaux de télévision par câble (S_{TV}) et du premier signal de multiplexage en fréquence (S_{T}), regrouper ceux-ci en un second signal de multiplexage en fréquence (S_{S}) qui est transmis aux appareils terminaux (4) par l'intermédiaire d'un réseau de branchement électrique (2), et
- **en ce que** le dispositif de démultiplexage et de multiplexage (40) possède des premiers moyens (26, 27) qui séparent les signaux vidéo propres aux abonnés et les signaux de télécommunications propres aux abonnés, et regroupent les signaux de télévision par câble et les signaux vidéo propres aux abonnés en un troisième signal de multiplexage en fréquence, ainsi que des seconds moyens (28, 30, 31) qui regroupent le troisième signal de multiplexage en fréquence et les signaux de télécommunications propres aux abonnés en le second signal de multiplexage en fréquence (S_{S}).

2. Dispositif terminal de réseau optique (3) pour un système de transmission optique, **caractérisé en ce qu'**il est prévu un dispositif de démultiplexage et de multiplexage (40), en vue, après une transmission optique de signaux de télévision par câble (S_{TV}) et d'un premier signal de multiplexage en fréquence (S_{T}) constitué de signaux vidéo propres aux abonnés et de signaux de télécommunications propres aux abonnés, de regrouper ceux-ci en un second signal de multiplexage en fréquence (S_{S}) qui sort au niveau de la sortie (22) du dispositif terminal de réseau optique (3), et **en ce que** le dispositif de démultiplexage et de multiplexage (40) possède des premiers moyens (26, 27) qui séparent les signaux vidéo propres aux abonnés et les signaux de télécommunications propres aux abonnés, et regroupent les signaux de télévision par câble et les signaux vidéo propres aux abonnés en un troisième signal de multiplexage en fréquence, ainsi que des seconds moyens (28, 30, 31) qui regroupent le troisième signal de multiplexage en fréquence et les signaux de télécommunications propres aux abonnés en le second signal de multiplexage en fréquence (S_{S}).

3. Système de transmission optique selon la revendication 1, ou dispositif terminal de réseau optique selon la revendication 2, **caractérisé en ce que** les premiers moyens (26, 27) du dispositif de démultiplexage et de multiplexage (40) sont constitués d'un premier dispositif de filtre (26), qui sépare les signaux vidéo propres aux abonnés et les signaux de télécommunications propres aux abonnés du premier signal de multiplexage en fréquence (S_{T}), et d'un premier dispositif d'amplification (27), qui amplifie les signaux de télévision par câble (S_{TV}) et les signaux vidéo propres aux abonnés.

4. Système de transmission optique d'informations selon la revendication 1, ou dispositif terminal de réseau optique selon la revendication 2, **caractérisé en ce que** les seconds moyens (28, 30, 31) du dispositif terminal de réseau optique (3) sont constitués d'un second dispositif d'amplification (28), qui amplifie les signaux de télécommunications propres aux abonnés en provenance du premier signal de multiplexage en fréquence (S_{T}), d'un second dispositif de filtre (30), qui laisse passer les signaux de télécommunications propres aux abonnés amplifiés, et d'un troisième dispositif de filtre (31), qui laisse passer le troisième signal de multiplexage en fréquence et les signaux de télécommunications propres aux abonnés en provenance du second dispositif de filtre (30).
